# EUROPÄISCHE PATENTANMELDUNG

(11) **EP 3 499 023 A1**
(43) Veröffentlichungstag der Anmeldung: **19.06.2019**
(21) Anmeldenummer: 18211484.3
(22) Anmeldetag: 11.12.2018
(51) Int. Cl.: F03D 7/02, F03D 7/04

(54) **VERFAHREN UND SYSTEM ZUM BETREIBEN EINER WINDENERGIEANLAGE**

(30) Priorität: 13.12.2017 DE 102017011512
(71) Anmelder: Senvion GmbH, 22297 Hamburg (DE)
(72) Erfinder: Geisler, Jens, 24768 Rendsburg (DE); Klemme, Thomas, 24106 Kiel (DE)
(74) Vertreter: Glawe, Delfs, Moll

(57) **Zusammenfassung**

Verfahren zum Betreiben einer Windenergieanlage, bei dem Zustandswerte (33) in ein Rotorblattmodell (34) eingespeist werden, wobei die Zustandswerte (33) einen Blattwinkelwert, einen Drehzahlwert und einen Windgeschwindigkeitswert umfassen. Das Rotorblattmodell (34) ist dazu ausgelegt ist, einen Schätzwert für einen Torsionszustand eines Rotorblatts (18) und/oder einen Korrekturwert (39) zum Ausgleich eines Torsionszustands eines Rotorblatts (18) zu ermitteln. Das Rotorblattmodell (34) wird ausgewertet, um einen Korrekturwert (39) für einen Stellwert (31) eines Blattwinkelreglers (28) zu erhalten. Die Erfindung betrifft außerdem ein zugehöriges Steuerungssystem.

## Beschreibung

Die Erfindung betrifft ein Verfahren zum Betreiben einer Windenergieanlage sowie ein zugehöriges Steuerungssystem.

Bei Windenergieanlagen wird ein Rotor in Windrichtung ausgerichtet, so dass der Rotor durch den Wind in Drehung versetzt wird. Der Rotor kann über eine Rotorwelle einen Generator antreiben, um elektrische Energie zu erzeugen.

Die Leistungsaufnahme aus dem Wind wird durch den Anstellwinkel (Pitchwinkel) der Rotorblätter beeinflusst. Das Einstellen des Anstellwinkels der Rotorblätter kann innerhalb eines geschlossenen Regelkreises erfolgen, in dem ein Blattwinkelregler anhand einer Abweichung zwischen einem Sollwert und einem Istwert einer zu regelnden Größe (Regelgröße) einen Stellwert für den Anstellwinkel der Rotorblätter ermittelt.

Bei der Gestaltung des Regelkreises ist es bislang üblich, von einem ideal steifen Rotorblatt auszugehen, bei dem die Leistungsaufnahme in erster Linie von der Schnelllaufzahl und dem Blattwinkel abhängt. Mit zunehmender Länge der Rotorblätter trifft diese Annahme immer weniger zu. Die Rotorblätter unterliegen im Betrieb einer elastischen Verformung. Insbesondere ist aus dem Stand der Technik bekannt, dass eine Torsion in dem Rotorblatt auftreten kann, was zur Folge haben kann, dass der lokale Anstellwinkel im Bereich der Blattspitze von dem lokalen Anstellwinkel im Bereich der Blattwurzel abweicht, WO 2016/078669 A1, DE 10 2015 119 986 A1.

Der Erfindung liegt die Aufgabe zugrunde, ein Verfahren und ein Steuerungssystem zum Betreiben einer Windenergieanlage vorzustellen, bei dem die elastische Verformung der Rotorblätter berücksichtigt wird. Die Aufgabe wird gelöst mit den Merkmalen der unabhängigen Ansprüche. Vorteilhafte Ausführungsformen sind in den Unteransprüchen angegeben.

Bei dem erfindungsgemäßen Verfahren werden Zustandswerte in ein Rotorblattmodell eingespeist, wobei die Zustandswerte einen Blattwinkelwert, einen Drehzahlwert und einen Windgeschwindigkeitswert umfassen. Das Rotorblattmodell ist dazu ausgelegt, einen Schätzwert für einen Torsionszustand eines Rotorblatts und/oder einen Korrekturwert zum Ausgleich eines Torsionszustands eines Rotorblatts zu ermitteln. Das Rotorblattmodell wird ausgewertet, um einen Korrekturwert für einen Stellwert eines Blattwinkelreglers zu erhalten.

Die Erfindung hat erkannt, dass es möglich ist, ohne Verwendung zusätzlicher Sensoren einen Schätzwert für den Torsionszustand eines Rotorblatts zu gewinnen bzw. einen Korrekturwert zum Ausgleich eines solchen Torsionszustands zu gewinnen. Abgeleitet werden kann der Schätzwert aus Informationen, die ohnehin zur Verfügung stehen, nämlich einer Information über den Anstellwinkel des Rotorblatts (Blattwinkelwert), einer Information über die Drehzahl des Rotors (Drehzahlwert) und einer Information über die Windgeschwindigkeit (Windgeschwindigkeitswert). Werden diese Informationen in ein mathematisches Modell eines Rotorblatts eingespeist, so liefert das Modell als Ergebnis einen Schätzwert für den Torsionszustand des Rotorblatts bzw. einen Korrekturwert zum Ausgleich eines solchen Torsionszustands. Liefert das Rotorblattmodell lediglich den Schätzwert (also nicht direkt den Korrekturwert), so kann der Korrekturwert mit einer weiteren Rechenvorschrift aus dem Schätzwert abgeleitet werden. Mit dem Korrekturwert kann der in dem geschlossenen Regelkreis ermittelte Stellwert für den Blattwinkel korrigiert werden, so dass im Ergebnis die Windenergieanlage auf einen Blattwinkel eingestellt werden kann, der durch Berücksichtigung der Torsion des Rotorblatts ein verbessertes Ergebnis liefert. Das verbesserte Ergebnis kann beispielsweise eine erhöhte Leistungsaufnahme aus dem Wind oder eine verminderte Geräuschabgabe sein.

Bei heutigen Rotorblättern gibt es häufig eine Kopplung zwischen einer Biegeverformung und einer Torsion. Die Kopplung kann sich daraus ergeben, dass ein distaler Abschnitt des Rotorblatts zur Seite gekrümmt ist, sodass der distale Abschnitt sich von der Rotorachse entfernt. Wird bei einem solchen Rotorblatt der distale Abschnitt aus der Rotorebene heraus gebogen, so geht diese Biegeverformung mit einer Torsion um die Längsachse des Blatts einher. Angesichts dieser Kopplung von Biegeverformung und Torsion kann nicht mehr von einem quasi-statischen aerodynamischen Zustand ausgegangen werden, bei dem es ausreicht, alleine einen windgeschwindigkeitsabhängigen Betriebsparameter zu betrachten. Die Erfindung hat erkannt, dass mit einem Rotorblattmodell, in das ein Drehzahlwert, ein Windgeschwindigkeitswert und ein Blattwinkelwert einfließen, eine zuverlässige Schätzung des Torsionszustands eines Rotorblatts möglich wird.

Bevorzugt handelt es sich bei dem Rotorblattmodell um eine einfache mathematische Funktion, die in Abhängigkeit der mindestens drei Eingangswerte mindestens einen Kennwert zur Beschreibung oder zur Korrektur eines quasistatischen Torsionszustandes des Rotorblattes bereitstellt. Bevorzugt handelt es sich hierbei um Approximationsfunktionen oder Lookup-Table, in denen mehrdimensional interpoliert wird.

Der Torsionszustand entspricht einer dreidimensionalen Verformung des Rotorblatts, bei dem verschiedene Abschnitte des belasteten Rotorblatts voneinander abweichende Verdrehwinkel um die Blattlängsachse im Vergleich zum unbelasteten Rotorblatt haben. Da eine Einstellung des Anstellwinkels nur zentral über die Blattwurzel möglich ist, gibt es bei einem durch Torsion verformten Rotorblatt keinen Anstellwinkel, bei dem das Rotorblatt über seine gesamte Länge ideal angeströmt wird. Mit der Erfindung wird deswegen vorgeschlagen, aus der dreidimensionalen Verformung einen eindimensionalen Korrekturwert abzuleiten, der in einen Anstellwinkel im Bereich der Blattwurzel umgesetzt werden kann. Der Korrekturwert ist vorzugsweise so gewählt, dass er über die Länge des Rotorblatts betrachtet einen günstigen Kompromiss für die Anströmbedingungen bietet.

Das Rotorblattmodell kann ein wenigstens dreidimensionales Kennfeld umfassen, in dem verschiedenen Kombinationen aus einem Blattwinkelwert, einem Drehzahlwert und einem Windgeschwindigkeitswert ein Schätzwert für den Torsionszustand des Rotorblatts und/oder ein Korrekturwert zum Ausgleich eines solchen Torsionszustands zugeordnet ist. Aus einem solchen Kennfeld kann leicht und ohne, dass es zu einer Verzögerung kommt, der Schätzwert bzw. der Korrekturwert abgelesen werden.

Die Genauigkeit der Torsionsschätzung kann erhöht werden, indem weitere Zustandswerte in dem Rotorblattmodell berücksichtigt werden können. Die weiteren Zustandswerte können sich auf Parameter des Windes beziehen, wie beispielsweise eine Windscherung, eine Schräganströmung, eine Turbulenz und/oder eine Luftdichte. Zusätzlich oder alternativ dazu können die weiteren Zustandswerte sich auf Parameter der Windenergieanlage beziehen, wie beispielsweise ein Blattwurzelbiegemoment, den Azimutwinkel der Rotorblätter und/oder den auf den Rotor wirkenden Schub. Wird der Schätzwert aus einem Kennfeld des Rotorblattmodells abgelesen, so kann die Zahl der Dimensionen des Kennfelds entsprechend erhöht sein.

In dem Blattwinkelregler kann ein Regelalgorithmus implementiert sein, der von einem ideal steifen Rotorblatt ausgeht. Bei einem ideal steifen Rotorblatt ist der Anstellwinkel über die gesamte Länge des Rotorblatts eindeutig definiert, wenn die Winkelposition der Blattwurzel relativ zur Rotornabe bekannt ist. Der Blattwinkelregler kann dazu ausgelegt sein, einen Stellwert zu ermitteln, so dass sich für ein ideal steifes Rotorblatt ein günstiger Betriebspunkt ergibt. Durch den erfindungsgemäßen Korrekturwert wird die Möglichkeit eröffnet, den für ein ideal steifes Rotorblatt bestimmten Stellwert so zu korrigieren, dass er für ein reales Rotorblatt mit Verformung passt.

Es gibt verschiedene Möglichkeiten, um den Korrekturwert für den Stellwert des Blattwinkelreglers in dem geschlossenen Regelkreis zu berücksichtigen. Der Korrekturwert kann als Offset verwendet werden, der am Ausgang des Blattwinkelreglers dem von dem Blattwinkelregler ermittelten Stellwert überlagert wird. Möglich ist auch, den am Eingang des Blattwinkelreglers anliegenden Sollwert mit dem Korrekturwert zu überlagern, so dass das Rotorblatt unter der Kontrolle des Blattwinkelreglers an den korrigierten Sollwert herangeführt wird.

Der von dem Blattwinkelregler ermittelte Stellwert bzw. der durch eine Vorsteuerung korrigierte Stellwert können an ein Stellglied für den Anstellwinkel des Rotorblatts (Pitchantrieb) geleitet werden. Das Stellglied kann den Anstellwinkel des Rotorblatts entsprechend einstellen.

Der Windgeschwindigkeitswert kann ein mit einem Anemometer ermittelter Messwert der Windgeschwindigkeit sein. Möglich ist auch, dass der Windgeschwindigkeitswert ein Schätzwert ist, der beispielsweise aus der auf den Rotor wirkenden Schubkraft oder der Leistung oder aus anderen Kombinationen von Betriebsparametern der Windenergieanlage abgeleitet ist. Es wirkt dann quasi der gesamte Rotor als Sensor, so dass eine solche Information häufig aussagekräftiger ist als ein Anemometer-Messwert. Der Blattwinkel der Rotorblätter und die Drehzahl des Rotors sind Betriebsparameter der Windenergieanlage, die einer direkten Messung zugänglich sind bzw. die ohnehin bekannt sind.

Im Rahmen der Erfindung umfassen die Begriffe Blattwinkelwert, Drehzahlwert, Windgeschwindigkeitswert sowohl solche direkten Größen bzw. Messwerte als auch indirekte Größen bzw. Messwerte. Als indirekt werden Größen bzw. Messwerte bezeichnet, die mit der direkten Größe in einem Zusammenhang stehen, so dass es möglich ist, aus der indirekten Größe eine Information über die direkte Größe zu gewinnen. So ist etwa ein für den Betrieb der Windenergieanlage relevante Größe die Schnelllaufzahl, die sich aus dem Verhältnis von Rotordrehzahl und Windgeschwindigkeit ableitet. Sind die Schnelllaufzahl als indirekte Größe sowie entweder die Rotordrehzahl oder die Windgeschwindigkeit als direkte Größe bekannt, so ist der Informationsgehalt derselbe, wie wenn beide direkten Größen bekannt wären. Ein anderes Beispiel für eine indirekte Größe könnte eine Identifizierung eines Teillastbetriebs der Windenergieanlage sein. Im Teillastbetrieb ist der Anstellwinkel des Rotorblatts immer im Wesentlichen 0°, so dass aus der indirekten Größe Teillastbetrieb eine Information über die direkte Größe Blattwinkel abgeleitet werden kann.

Die Ermittlung des Korrekturwerts für den Blattwinkelregler aus dem Schätzwert des Torsionszustands kann anhand eines Regelungsziels erfolgen. Mit anderen Worten wird der Korrekturwert so berechnet, dass durch den Korrekturwert das Regelungsziel in verbessertem Maße erreicht wird.

Das Regelungsziel kann beispielsweise eine Maximierung der Energieerzeugung sein. Der Korrekturwert wird dann so berechnet, dass durch die Anwendung des Korrekturwerts auf den Anstellwinkel des Rotorblatts die Leistungsaufnahme aus dem Wind erhöht wird. Insbesondere kann das Rotorblatt auf den aerodynamisch leistungsstärksten Betriebspunkt eingestellt werden.

Das Regelungsziel kann eine Lastreduzierung sein. Wenn eine Windenergieanlage im Betrieb geringeren Lasten ausgesetzt ist, kann sich dies positiv auf die Lebensdauer der Windenergieanlage auswirken. Das Regelungsziel kann eine Verminderung von Leistungsschwankungen sein. Für die Stabilität des Netzes kann es von Vorteil sein, wenn die Leistungsabgabe der Windenergieanlage möglichst gleichmäßig ist. Möglich sind auch andere Regelungsziele wie beispielsweise Geräuschreduzierung oder die Vermeidung eines Strömungsabrisses (Stall-Vermeidung).

Das Verfahren kann so durchgeführt werden, dass ein einzelnes Regelungsziel vorgegeben ist und dass eine Rechenvorschrift für den Korrekturwert angewendet wird, die sich an diesem Regelungsziel orientiert. Möglich ist auch eine Rechenvorschrift, die dazu bestimmt ist, einen im Hinblick auf zwei oder mehr Regelungsziele optimalen Korrekturwert zu ermitteln. Der Begriff Rechenvorschrift umfasst eine Folge mathematischer Operationen ebenso wie Tabellen oder ähnliches, aus denen bestimmte Zuordnungen abgelesen werden können. Die Rechenvorschrift für den Korrekturwert kann in dem Rotorblattmodell enthalten sein. Möglich ist auch eine separate Rechenvorschrift, mit der der Korrekturwert anhand des Schätzwerts für den Torsionszustand berechnet wird, den das Rotorblattmodell ermittelt hat.
Das Verfahren kann mit mehreren Rechenvorschriften durchgeführt werden, wobei die Rechenvorschriften auf unterschiedliche Regelungsziele hin ausgelegt sind. Es kann also eine erste Rechenvorschrift dazu ausgelegt sein, einen im Hinblick auf ein erstes Regelungsziel optimalen Korrekturwert zu berechnen, und eine zweite Rechenvorschrift dazu ausgelegt sein, einen im Hinblick auf ein zweites Regelungsziel optimalen Korrekturwert zu berechnen. Das Verfahren kann so durchgeführt werden, dass die Rechenvorschriften nicht parallel zueinander, sondern nur nacheinander verwendet werden.

Es können Bedingungen festgelegt sein, bei deren Eintritt zwischen einer ersten Rechenvorschrift und einer zweiten Rechenvorschrift gewechselt wird. Es kann ein Default-Regelungsziel vorgegeben sein, dass verwendet wird, wenn keine der Bedingungen vorliegt. Das Default-Regelungsziel kann beispielsweise eine Optimierung der Leistungsaufnahme sein. Ist ab einem bestimmten Zeitpunkt ein geräuschreduzierter Betrieb gefordert, so kann der Eintritt dieses Zeitpunkts eine Bedingung sein, um zu der Rechenvorschrift mit dem Regelungsziel Geräuschreduzierung zu wechseln. Treten Turbulenzen oberhalb eines vorgegebenen Schwellwerts auf, so kann zu einer Rechenvorschrift gewechselt werden, die im Hinblick auf eine Reduzierung der Leistungsschwankungen optimiert ist. Tritt eine Schräganströmung auf, bei der der Winkel zwischen der Windrichtung und der Rotorachse größer ist als ein vorgegebener Schwellwert, so kann zu einer Rechenvorschrift gewechselt werden, die im Hinblick auf eine Lastreduzierung der Windenergieanlage optimiert ist.

Die Rechenvorschriften können sich beispielsweise darin unterscheiden, dass bei einer ersten Rechenvorschrift eine erste Gewichtung der Torsionsverteilung über die Blattlänge angewendet wird und dass bei einer zweiten Rechenvorschrift eine zweite Gewichtung der Torsionsverteilung über die Blattlänge angewendet wird.

Das Verfahren kann so durchgeführt werden, dass der Korrekturwert kollektiv für alle Rotorblätter eines Rotorblatts gültig ist. Es werden dann alle Rotorblätter durch den Korrekturwert in der gleichen Weise beeinflusst, unabhängig von der momentanen Azimutposition des Rotorblatts. Azimutposition bezeichnet die Richtung, in der sich das Rotorblatt ausgehend von der Rotornabe erstreckt. Die Azimutposition ändert sich demnach kontinuierlich, wenn der Rotor sich um die Rotorachse dreht.

Wird ein Korrekturwert kollektiv auf alle Rotorblätter eines Rotors angewendet, so kann mit dem Korrekturwert kein Einfluss korrigiert werden, der nur auf ein einzelnes Rotorblatt wirkt oder der abhängig von der Azimutposition eines Rotorblatts ist. In einer anderen Ausführungsform wird das Verfahren deswegen so durchgeführt, dass der Korrekturwert ein individueller Korrekturwert ist, der nur für eines der Rotorblätter gültig ist. In einer Ausführungsform des Verfahrens wird für jedes der Rotorblätter eines Rotors ein eigener Korrekturwert ermittelt.

Ein von der Azimutposition abhängiger Einfluss auf das Rotorblatt ist die Schwerkraft. Ein Rotorblatt verformt sich während eines Umlaufs des Rotorblatts unter dem Einfluss der Schwerkraft in unterschiedlicher Weise, weil die Schwerkraft parallel zur Längsachse des Rotorblatts wirkt, wenn das Rotorblatt nach oben oder unten zeigt, und quer zur Längsachse des Rotorblatts wirkt, wenn das Rotorblatt zur Seite zeigt. Wird die Blattspitze aus der Ebene des Rotorblatts heraus gebogen, so geht diese Biegeverformung regelmäßig mit einer Torsionsverformung einher. In einer Ausführungsform des Verfahrens wird der Korrekturwert so berechnet, dass durch den Korrekturwert eine durch die Schwerkraft bewirkte Verformung des Rotorblatts ausgeglichen wird. Der Korrekturwert kann sich während eines Umlaufs des Rotorblatts ändern, wobei insbesondere die Änderung zyklisch sein kann und/oder eine Periode haben kann, die der Dauer des Rotorumlaufs entspricht. Dieser Gedanke hat eigenständigen erfinderischen Gehalt, auch ohne dass die in das Rotorblattmodell eingespeisten Zustandswerte einen Blattwinkelwert, einen Drehzahlwert und einen Windgeschwindigkeitswert umfassen.

Der für ein Rotorblatt bestimmte individuelle Korrekturwert kann während eines Rotorumlaufs sowohl positive Werte als auch negative Werte umfassen. Der Nulldurchgang zwischen den positiven Werten und den negativen Werten kann erfolgen, wenn die Längsachse des Rotorblatts einen Winkel von weniger als 20°, vorzuweisen weniger als 10° mit der Richtung der Schwerkraft einschließt. Der Betrag des Korrekturwerts kann maximal sein, wenn die Längsachse des Rotorblatts einen großen Winkel mit der Richtung der Schwerkraft einschließt, beispielsweise einen Winkel zwischen 70° und 110°, vorzugsweise zwischen 80° und 100°. Insbesondere kann der Korrekturwert sich im Wesentlichen sinusförmig ändern.

Das Verfahren kann so durchgeführt werden, dass ein kollektiver Korrekturwert und ein individueller Korrekturwert ermittelt werden. Der Anstellwinkel des Rotorblatts kann sowohl anhand des individuellen Korrekturwerts als auch anhand des kollektiven Korrekturwerts eingestellt werden. Insbesondere kann ein Gesamt-Korrekturwert auf das Rotorblatt angewendet werden, wobei der Gesamt-Korrekturwert einer Kombination aus dem individuellen Korrekturwert und dem kollektiven Korrekturwert entspricht. Beispielsweise können der kollektive Korrekturwert und der individuelle Korrekturwert addiert werden.

Die Erfindung betrifft außerdem ein Steuerungssystem für eine Windenergieanlage mit einem Blattwinkelregler und einem Korrekturmodul. Der Blattwinkelregler ist dazu ausgelegt, in einem geschlossenen Regelkreis einen Stellwert für einen Anstellwinkel eines Rotorblatts zu ermitteln. In dem Korrekturmodul ist ein Rotorblattmodell hinterlegt, so dass das Korrekturmodul ausgehend von Zustandswerten einen Korrekturwert zum Ausgleich eines Torsionszustands eines Rotorblatts ermitteln kann, wobei die Zustandswerte einen Blattwinkelwert, einen Drehzahlwert und einen Windgeschwindigkeitswert umfassen. Das Korrekturmodul ist dazu ausgelegt, den Korrekturwert für die Korrektur eines Stellwerts des Blattwinkelreglers bereitzustellen.

Das Korrekturmodul kann als eine bauliche Einheit ausgeführt sein. Möglich ist auch, die Funktionen des Korrekturmoduls auf mehrere separate Komponenten zu verteilen. Die Erfindung betrifft weiter eine Windenergieanlage mit einem solchen Steuerungssystem. Die Windenergieanlage umfasst einen Pitchantrieb, der dazu ausgelegt ist, den Anstellwinkel eines Rotorblatts, gemäß einem von dem Steuerungssystem vorgegebenen Wert einzustellen, wobei der Wert ein durch den Korrekturwert korrigierter Stellwert des Blattwinkelreglers ist.

Das Steuerungssystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Steuerungssystems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: ein Rotorblatt einer erfindungsgemäßen Windenergieanlage;
- Fig. 3:: einen vergrößerten Schnitt entlang Linie A-A in Fig. 2;
- Fig. 4:: einen vergrößerten Schnitt entlang Linie B-B in Fig. 2;
- Fig. 5:: eine Darstellung des Torsionswinkels über der Länge des Rotorblatts;
- Fig. 6:: eine schematische Darstellung eines erfindungsgemäßen Steuersystems;
- Fig. 7:: eine alternative Ausführungsform eines erfindungsgemäßen Steuerungssystems.

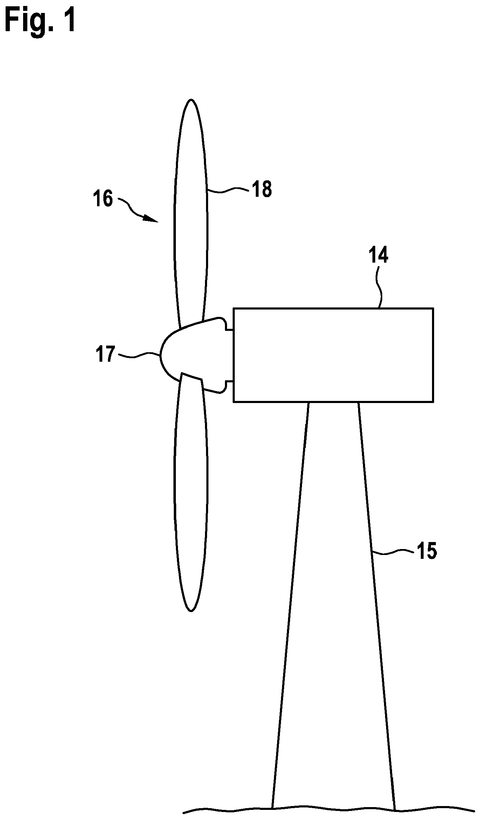

Bei einer Windenergieanlage gemäß Fig. 1 ist eine Gondel 14 drehbar auf einem Turm 15 gelagert. Die Gondel 14 trägt einen Rotor 16, der über eine Rotorwelle einen Generator antreibt, um elektrische Energie zu erzeugen. Die Gondel 14 wird relativ zu dem Turm 15 gedreht, um den Rotor 16 zum Wind auszurichten, so dass der Rotor 16 durch den Wind in Drehung um eine im Wesentlichen horizontale Rotorachse versetzt werden kann.

Der Rotor 16 umfasst eine Rotornabe 17 und zwei oder drei Rotorblätter 18. Die Rotorblätter 18 erstrecken sich in radialer Richtung zwischen einer an der Rotornabe 17 angeschlagenen Blattwurzel 19 und einer Blattspitze 20. Jedes Rotorblatt 18 ist über ein Drehlager an der Rotornabe 17 angeschlagen, so dass das Rotorblatt 18 relativ zu der Rotornabe 17 gedreht werden kann. Die Drehachse entspricht im Wesentlichen einer Längsachse 21 des Rotorblatts 18.

Der Rotor 16 umfasst für jedes Rotorblatt einen Pitchantrieb 22, der dazu ausgelegt ist, die Drehbewegung des Rotorblatts 18 relativ zu der Rotornabe 17 anzutreiben. Durch Betätigen des Pitchantriebs kann der Anstellwinkel eingestellt werden, unter dem das Rotorblatt 18 vom Wind angeströmt wird. Durch den Anstellwinkel kann Einfluss darauf genommen werden, wie viel Leistung über den Rotor 16 aus dem Wind aufgenommen wird.

Das Rotorblatt 18 erstreckt sich zwischen einer Vorderkante 23 und einer Hinterkante 24. Das Rotorblatt 18 hat einen zu der Blattwurzel 19 benachbarten Abschnitt, der sich im Wesentlichen entlang der Längsachse 21 des Rotorblatts 18 erstreckt. Bei drehendem Rotor überstreicht die Blattlängsachse eine ebene oder leicht konusförmige Fläche, die als Rotorebene bezeichnet wird.

Im Betrieb der Windenergieanlage wirken wechselnde Lasten auf das Rotorblatt 18, unter denen das Rotorblatt sich elastisch verformt. Insbesondere können Verformungen auftreten, bei denen die Blattspitze 20 relativ zu der Blattwurzel 19 verdreht wird, bei denen sich also ein Torsionszustand des Rotorblatts 18 einstellt. Ein Torsionszustand kann insbesondere daraus resultieren, dass der aerodynamische Schwerpunkt eines Rotorblattprofils in einem geometrischen Abstand zu dem strukturellen Schubmittelpunkt dieses Rotorblattprofils liegt. Auch kann die aus aerodynamischen Gründen erforderliche Verwindung eines Rotorblattes zu einer Kopplung der Biegung mit einer Torsion führen (Bend-Twist-Coupling).

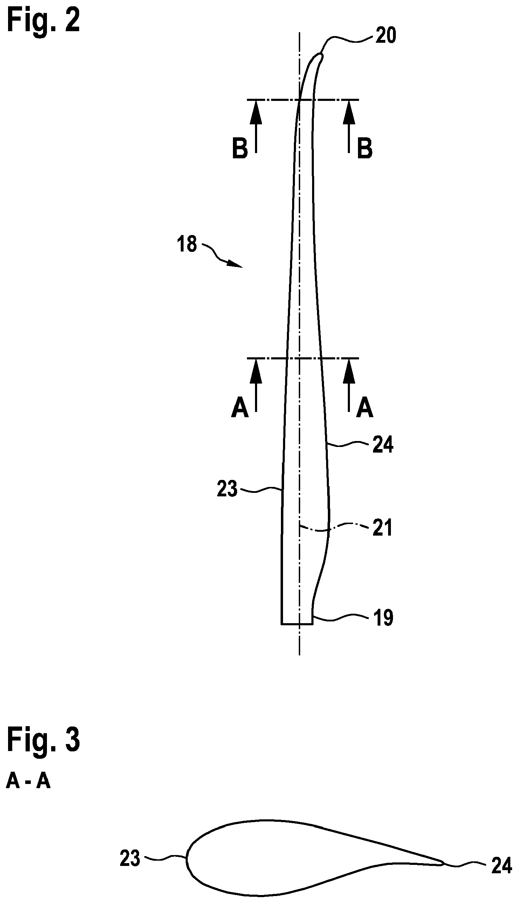

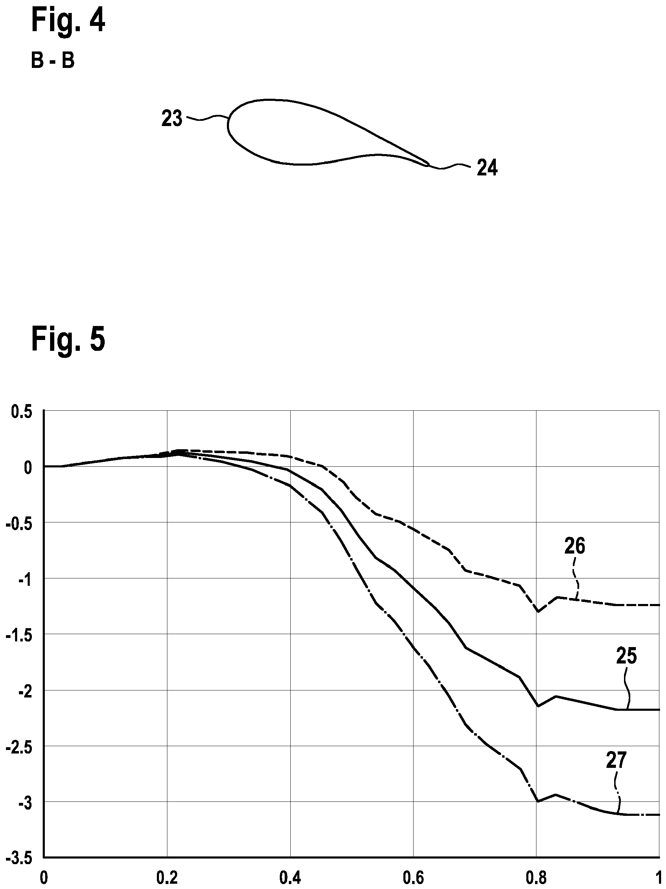

Gemäß der Schnittdarstellung in Fig. 3 hat das Rotorblatt 18 ein Tragflächenprofil, dass sich zwischen der Vorderkante 23 und der Hinterkante 24 erstreckt. Wird der distale Abschnitt des Rotorblatts 18 aus der Rotorebene heraus nach hinten gebogen, so kommt es zu einer Torsion, durch die das Rotorblatt 18 lokal einen gegenüber dem unverformten Zustand vergrößerten oder verkleinerten Anstellwinkel hat. Dies zeigt die Schnittdarstellung des distalen Abschnitts des Rotorblatts 18 in Fig. 4, bei der die Hinterkante 24 relativ zu der Vorderkante 23 nach unten gebogen ist.

In Fig. 5 ist der Torsionswinkel über der Länge des Rotorblatts 18 aufgetragen. Die Darstellung bezieht sich auf einen Zustand, in dem die Längsachse 21 des Rotorblatts 18 senkrecht zur Schwerkraft ausgerichtet ist. Die mittlere Kurve 25 zeigt einen durchschnittlichen Torsionszustand, die obere Kurve 26 einen minimalen Torsionszustand und die untere Kurve 27 einen maximalen Torsionszustand. Im Bereich der Blattwurzel 19 ist der Torsionswinkel 0°, das Rotorblatt 18 ist also nicht verdreht. Im von der Blattwurzel 19 entfernten Bereich stellt sich ein negativer Torsionswinkel ein, der mit zunehmendem Abstand von der Blattwurzel 19 größer wird. Bei dem durchschnittlichen Torsionszustand gemäß der mittleren Kurve 25 ist die Blattspitze 20 um etwa -2° relativ zu der Blattwurzel 19 verdreht.

Aufgrund der Torsion des Rotorblatts 18 kann nicht von einem über die Länge des Rotorblatts 18 optimalen Anstellwinkel ausgegangen werden. Wird beispielsweise das Rotorblatt 18 im Bereich der Blattwurzel 19 auf einen optimalen Anstellwinkel eingestellt, so wird der distale Abschnitt des Rotorblatts 18 aufgrund des Torsionszustands nicht optimal angeströmt. Dies kann unerwünschte Folgen haben wie beispielsweise eine verminderte Leistungsaufnahme oder eine erhöhte Geräuschentwicklung.

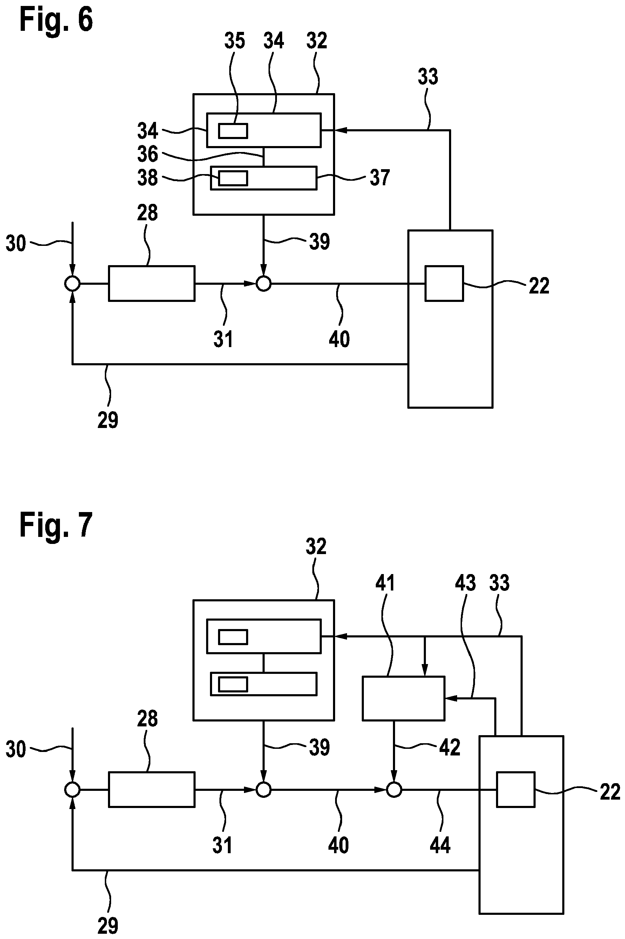

Die Windenergieanlage umfasst gemäß Fig. 6 ein Steuerungssystem, bei dem der Pitchantrieb 22 in einem geschlossenen Regelkreis angesteuert wird. Ein Blattwinkelregler 28 ermittelt anhand einer Differenz zwischen einem Istwert 29 und einem Sollwert 30 einen Stellwert 31 für den Pitchantrieb 22. Der Blattwinkelregler 28 ist so gestaltet, dass der Stellwert 31 optimal sein soll für ein ideales Rotorblatt, das keiner Torsion unterliegt. Tritt tatsächlich eine Torsion in dem Rotorblatt 18 auf, so ist das Ergebnis suboptimal, wenn der Pitchantrieb 22 gemäß dem von dem Blattwinkelregler 28 ermittelten Stellwert 31 eingestellt wird.
Das Steuerungssystem umfasst zusätzlich ein Korrekturmodul 32 dem Zustandswerte 33 zugeführt werden, aus denen eine Information über den Torsionszustand des Rotorblatts 28 abgeleitet werden kann. Die Zustandswerte 33, die einen Blattwinkelwert, einen Drehzahlwert und einen Windgeschwindigkeitswert umfassen, werden einem Rotorblattmodell 34 zugeführt, das anhand eines dreidimensionalen Kennfelds 35 einen Schätzwert 36 für den Torsionszustand des Rotorblatts 18 ermittelt.

Der Schätzwert 36 wird zu einer Recheneinheit 37 geleitet. Die Recheneinheit 37 umfasst einen Speicher 38, in dem eine Mehrzahl von Rechenvorschriften hinterlegt ist. Die Rechenvorschriften sind jeweils einem bestimmten Regelungsziel zugeordnet und dienen dazu, einen Korrekturwert 39 für den Stellwert 31 zu ermitteln, so dass das Rotorblatt 18 mit einem korrigierten Stellwert 40 eingestellt wird, der im Hinblick auf das betreffende Regelungsziel optimal ist.

Es können bestimmte Bedingungen festgelegt sein, anhand derer dem Steuerungssystem vorgegeben werden kann, welche der in dem Speicher 38 hinterlegten Rechenvorschriften verwendet werden soll. In vielen Fällen wird das Regelungsziel eine optimierte Leistungsausbeute sein, so dass die zugehörige Rechenvorschrift als Default verwendet werden kann, sofern keine besondere Bedingung eingetreten ist. Zu bestimmten Tageszeiten kann ein geräuschreduzierter Betrieb gefordert sein, so dass eine für dieses Regelungsziel gültige Rechenvorschrift aktiviert wird. Bei starken Turbulenzen oder starker Schräganströmung kann eine Rechenvorschrift verwendet werden mit dem Regelungsziel, die Belastung für die Windenergieanlage zu vermindern.

Der mit der Recheneinheit 37 ermittelte Korrekturwert 39 wird dem von dem Blattwinkelregler 28 ermittelten Stellwert 31 additiv überlagert, so dass sich ein korrigierter Stellwert 40 ergibt. Der Pitchantrieb 22 wird gemäß dem korrigierten Stellwert 40 eingestellt. Der Korrekturwert 39 ist ein kollektiver Korrekturwert, der allen drei Rotorblättern 18 des Rotors 16 in derselben Weise überlagert wird.

Bei der alternativen Ausführungsform gemäß Fig. 7 umfasst die Steuerungseinheit ein erstes Korrekturmodul 32 und ein zweites Korrekturmodul 41. Das erste Korrekturmodul 32 hat dieselbe Funktion wie das Korrekturmodul 32 in Fig. 6. Der mit dem ersten Korrekturmodul 32 ermittelte Korrekturwert 39 ist ein kollektiver Korrekturwert, der für alle Rotorblätter 18 des Rotors 16 bestimmt ist.

Das zweite Korrekturmodul 41 ist dazu ausgelegt individuelle Korrekturwerte 42 zu ermitteln, die jeweils nur für ein einzelnes Rotorblatt 18 bestimmt sind. Dem zweiten Korrekturmodul 41 werden die Zustandswerte 33 sowie eine Information 43 über die aktuelle Azimutposition des Rotorblatts 18 zugeführt. Aus der Azimutposition lässt sich ableiten, in welcher Richtung die Schwerkraft auf das Rotorblatt 18 wirkt und welcher Torsionszustand sich daraus sowie aus den Zustandswerten 33 ergibt. Der individuelle Korrekturwert 42 wird so ermittelt, dass er den durch die Schwerkraft verursachten Torsionszustand des Rotorblatts 18 ausgleicht.

Der individuelle Korrekturwert 42 wird dem kollektiv korrigierten Stellwert 40 additiv überlagert, so dass sich ein individuell korrigierter Stellwert 44 ergibt. Der Pitchantrieb 22 ist dazu ausgelegt, das betreffende Rotorblatt 18 gemäß dem individuell korrigierten Stellwert 44 einzustellen.

## Patentansprüche

1. Verfahren zum Betreiben einer Windenergieanlage mit folgenden Schritten:
a. Einspeisen von Zustandswerten (33) in ein Rotorblattmodell (34), wobei die Zustandswerte (33) einen Blattwinkelwert, einen Drehzahlwert und einen Windgeschwindigkeitswert umfassen, und wobei das Rotorblattmodell dazu ausgelegt ist, einen Schätzwert für einen Torsionszustand eines Rotorblatts (18) und/oder einen Korrekturwert (39) zum Ausgleich eines Torsionszustands eines Rotorblatts (18) zu ermitteln;
b. Auswerten des Rotorblattmodells (34), um einen Korrekturwert (39) für einen Stellwert (31) eines Blattwinkelreglers (28) zu erhalten.

2. Verfahren nach Anspruch 1, **dadurch gekennzeichnet, dass** das Rotorblattmodell (34) ein wenigstens dreidimensionales Kennfeld (35) umfasst, in dem verschiedenen Kombinationen aus einem Blattwinkelwert, einem Drehzahlwert und einem Windgeschwindigkeitswert ein Schätzwert (36) für den Torsionszustand des Rotorblatts (18) zugeordnet ist.

3. Verfahren nach Anspruch 1 oder 2, **dadurch gekennzeichnet, dass** die Zustandswerte (33) ferner einen Luftdichtewert, einen Turbulenzwert und/oder einen Schräganströmungswert umfassen.

4. Verfahren nach einem der Ansprüche 1 bis 3, **dadurch gekennzeichnet, dass** in dem Blattwinkelregler (28) ein Regelalgorithmus implementiert ist, der von einem ideal steifen Rotorblatt (18) ausgeht.

5. Verfahren nach einem der Ansprüche 1 bis 4, **dadurch gekennzeichnet, dass** der Korrekturwert (39) als Offset verwendet wird, der am Ausgang des Blattwinkelreglers (28) dem von dem Blattwinkelregler (28) ermittelten Stellwert (31) überlagert wird.

6. Verfahren nach einem der Ansprüche 1 bis 5, **dadurch gekennzeichnet, dass** der Korrekturwert (39) anhand eines Regelungsziels berechnet wird.

7. Verfahren nach Anspruch 6, **dadurch gekennzeichnet, dass** bei einem ersten Regelungsziel eine erste Rechenvorschrift zum Berechnen des Korrekturwerts (39) angewendet wird und dass bei einem zweiten Regelungsziel eine zweite Rechenvorschrift zum Berechnen des Korrekturwerts (39) angewendet wird.

8. Verfahren nach Anspruch 6 oder 7, **dadurch gekennzeichnet, dass** die Regelungsziele eine Maximierung der Energieerzeugung, eine Reduzierung der auf die Windenergieanlage wirkenden Last, eine Verminderung von Leistungsschwankungen und/oder eine Geräuschreduzierung umfassen.

9. Verfahren nach einem der Ansprüche 1 bis 8, **dadurch gekennzeichnet, dass** ein kollektiver Korrekturwert (39) berechnet wird, der für alle Rotorblätter (18) eines Rotors (16) bestimmt ist.

10. Verfahren nach einem der Ansprüche 1 bis 9, **dadurch gekennzeichnet, dass** ein individueller Korrekturwert (42) berechnet wird, der für ein einzelnes Rotorblatt (18) bestimmt ist.

11. Verfahren nach Anspruch 10, **dadurch gekennzeichnet, dass** der individuelle Korrekturwert (42) sich während der Dauer eines Rotorumlaufs ändert.

12. Steuerungssystem für eine Windenergieanlage mit einem Blattwinkelregler (28) und einem Korrekturmodul (32), wobei der Blattwinkelregler (28) dazu ausgelegt ist, in einem geschlossenen Regelkreis einen Stellwert (31) für einen Anstellwinkel eines Rotorblatts (18) zu ermitteln, wobei in dem Korrekturmodul (32) ein Rotorblattmodell (34) hinterlegt ist, so dass das Korrekturmodul (32) ausgehend von Zustandswerten (33) einen Korrekturwert (39) zum Ausgleich eines Torsionszustands eines Rotorblatts ermitteln kann, wobei die Zustandswerte (33) einen Blattwinkelwert, einen Drehzahlwert und einen Windgeschwindigkeitswert umfassen, und wobei das Korrekturmodul (32) dazu ausgelegt ist, den Korrekturwert (39) für die Korrektur eines Stellwerts (31) des Blattwinkelreglers (28) bereitzustellen.
